# FASCICULE DE BREVET EUROPEEN

(11) **EP 2 334 750 B1**
(45) Date de publication et mention de la délivrance du brevet: **18.04.2018**
(21) Numéro de dépôt: 09756010.6
(22) Date de dépôt: 13.10.2009
(51) Int. Cl.: C09K 5/04

(54) **PROCEDE DE TRANSFERT DE CHALEUR**
WÄRMEAUSTAUSCHVERFAHREN
HEAT TRANSFER METHOD

(30) Priorité: 16.10.2008 FR 0857032
(43) Date de publication de la demande: 22.06.2011
(73) Titulaire: Arkema France, 92700 Colombes (FR)
(72) Inventeur: ABBAS, Laurent, Narberth PA,19072 (US); RACHED, Wissam, F-69630 CHAPONOST (FR)
(74) Mandataire: Chahine, Audrey Claire
(86) Numéro de dépôt international: PCT/FR2009/051943
(87) Numéro de publication internationale: WO 2010/043807

(56) Documents cités:
- WO-A-2007/002625
- WO-A2-2009/140231
- US-A1- 2006 266 976
- US-A1- 2008 098 755

## Description

La présente invention concerne un procédé de transfert de chaleur à l'aide d'une composition renfermant des hydrochlorofluorooléfines. Elle a plus particulièrement pour objet l'utilisation d'une composition renfermant des hydrochlorofluorooléfines dans les pompes à chaleur.

Les problèmes posés par les substances appauvrissant la couche d'ozone atmosphérique (ODP : ozone depletion potential) ont été traités à Montréal où a été signé le protocole imposant une réduction de la production et de l'utilisation des chlorofluorocarbures (CFC). Ce protocole a fait l'objet d'amendements qui ont imposé l'abandon des CFC et étendu la réglementation à d'autres produits.

L'industrie de la réfrigération et de la production d'air conditionné a beaucoup investi dans la substitution de ces fluides frigorigènes.

Dans l'industrie automobile, les systèmes de climatisation des véhicules commercialisés dans de nombreux pays sont passés d'un fluide frigorigène au chlorofluorocarbure (CFC-12) à celui de l'hydrofluorocarbure (1,1,1,2 tetrafluoroéthane : HFC-134a), moins nocif pour la couche d'ozone. Cependant, au regard des objectifs fixés par le protocole de Kyoto, le HFC-134a (GWP = 1300) est considéré comme ayant un pouvoir de réchauffement élevé. La contribution à l'effet de serre d'un fluide est quantifiée par un critère, le GWP (Global Warming Potentials) qui résume le pouvoir de réchauffement en prenant une valeur de référence de 1 pour le dioxyde de carbone.

Le dioxyde de carbone étant non-toxique, ininflammable et ayant un très faible GWP, a été proposé comme fluide frigorigène des systèmes de climatisation en remplacement du HFC-134a. Toutefois, l'emploi du dioxyde de carbone présente plusieurs inconvénients, notamment liés à la pression très élevée de sa mise en oeuvre en tant que fluide frigorigène dans les appareils et technologies existants.

Le document JP 4110388 décrit l'utilisation des hydrofluoropropènes de formule C₃HₘFₙ, avec m, n représentant un nombre entier compris entre 1 et 5 inclus et m + n = 6, comme fluides de transfert de chaleur, en particulier le tetrafluoropropène et le trifluoropropène.

Le document WO2004/037913 divulgue l'utilisation des compositions comprenant au moins un fluoroalcène ayant trois ou quatre atomes de carbone, notamment le pentafluoropropène et le tetrafluoropropène, de préférence ayant un GWP au plus de 150, comme fluides de transfert de chaleur.

Dans le document WO 2007/002625, des fluorohalogénoalcènes ayant de 3 à 6 atomes de carbone, notamment les tetrafluoropropènes, les pentafluoropropènes et les chlorotrifluoropropènes ont été décrites comme susceptibles d'être utilisées comme fluide de transfert de chaleur.

Le document US2008/098755 concerne un procédé de transfert de chaleur mettant en oeuvre une composition comprenant du trifluoromonochloropropène comme fluide frigorigène. US2006/266976 concerne des compositions frigorigènes comprenant au moins une bromofluorooléfine.

Dans le domaine des pompes à chaleur, des substituts au dichlorotetrafluoroéthane (HCFC-114), utilisé dans des conditions de température de condensation élevée, ont été proposés. Ainsi, le document US 6814884 décrit une composition comprenant du 1,1,1,3,3-pentafluorobutane (HFC-365mfc) et au moins un composé choisi parmi le 1,1,1,2 tetrafluoroéthane, le pentafluoroéthane (HFC-125), le 1,1,1,3,3-pentafluoropropane (HFC-245fa) et le 1,1,1,2,3,3,3-heptafluorapropane (HFC-227ea). Cependant, ces composés ont un GWP élevé.

La demanderesse a maintenant découvert que des compositions renfermant des hydrochlorofluorooléfines conviennent tout particulièrement comme fluide de transfert de chaleur dans les pompes à chaleur, en particulier les pompes à chaleur opérant à température de condensation élevée. En outre ces compositions ont un ODP négligeable et un GWP inférieur à celui des fluides de transfert de chaleur existants.

On entend par hydrochlorofluorooléfines des oléfines ayant de 3 à 4 atomes de carbone comportant un atome de chlore et au moins un atome de fluor. De préférence, l'atome de chlore est porté par le carbone insaturé.

Une pompe à chaleur est un dispositif thermodynamique permettant de transférer de la chaleur du milieu le plus froid vers le milieu le plus chaud. Les pompes à chaleur employées pour le chauffage sont dites à compression et le fonctionnement est basé sur le principe de cycle à compression de fluides, appelés fluides frigorigènes. Ces pompes à chaleur fonctionnent avec des systèmes à compression comportant un seul ou plusieurs étage(s). A un étage donné, lorsque le fluide frigorigène est comprimé et passe de l'état gazeux à l'état liquide, il se produit une réaction exothermique (condensation) qui produit de la chaleur. A l'inverse, si on détend le fluide en le faisant passer de l'état liquide à l'état gazeux, il se produit une réaction endothermique (évaporation), qui produit une sensation de froid. Tout repose donc sur le changement d'état d'un fluide utilisé en circuit fermé.

Chaque étage d'un système à compression comprend (i) une étape d'évaporation au cours de laquelle au contact des calories puisées dans l'environnement, le fluide frigorigène, grâce à son faible point d'ébullition, passe de l'état liquide à l'état de gaz, (ii) une étape de compression au cours de laquelle le gaz de l'étape précédente est porté à haute pression, (iii) une étape de condensation au cours de laquelle le gaz va transmettre sa chaleur au circuit chauffage ; le fluide frigorigène, toujours comprimé, redevient liquide et (iv) une étape de détente au cours de laquelle la pression du fluide est réduite. Le fluide est prêt pour une nouvelle absorption de calories de l'environnement froid.

La présente invention a pour objet un procédé de transfert de chaleur mettant en oeuvre un système à compression comportant au moins un étage comprenant successivement une étape d'évaporation d'un fluide frigorigène, une étape de compression, une étape de condensation dudit fluide à une température supérieure ou égale à 70°C et une étape de détente dudit fluide caractérisé en ce que le fluide frigorigène comprend au moins une hydrochlorofluorooléfine.

De préférence, la température de condensation du fluide frigorigène est comprise entre 70 et 140°C, et avantageusement comprise entre 95 et 125°C.

De préférence, les hydrochlorofluorooléfines comportent au moins trois atomes de fluor.

Les hydrochlorofluorooléfines particulièrement intéressantes sont les chlorotrifluoropropènes (HCFO-1233), notamment le 1-chloro,3,3,3-trifluoropropène (HCFO-1233zd) et le 2- chloro,3,3,3-trifluoropropène (HCFO-1233xf). Le 1-chloro,3,3,3-trifluoropropène peut aussi bien être sous la forme cis que la forme trans.

Outre les ou l'hydrochlorofluorooléfine(s), le fluide frigorigène peut comprendre au moins un hydrofluorocarbure.

Comme hydrofluorocarbures, on peut citer notamment le 1,1,1,3,3-pentafluorobutane, le 1,1,1,2 tetrafluoroéthane, le pentafluoroéthane, le 1,1,1,3,3-pentafluoropropane, le 1,1,1,2,3-pentafluoropropane, le 1,1,1,2,2-pentafluoropropane et le 1,1,1,2,3,3,3-heptafluoropropane.

Le fluide frigorigène peut également comprendre au moins un fluoroéther, de préférence au moins un hydrofluoroéther et avantageusement au moins un hydrofluoroéther ayant de trois à six atomes de carbone.

Comme hydrofluoroéthers, on peut citer notamment l'heptafluoromethoxy propane, le nonafluoromethoxy butane et le nonafluoroéthoxy butane. L'hydrofluoroéther est disponible sous plusieurs formes isomères tels que le 1,1,1,2,2,3,3,4,4-nonafluoro-éthoxybutane, le 1,1,1,2,3,3 -hexafluoro-2-(trifluorométhyl)-3-éthoxybutane, le 1,1,1,2,2,3,3,4,4-nonafluoro-méthoxybutane et le 1,1,1,2,3,3 -hexafluoro-2-(trifluorométhyl)-3-méthoxybutane.

Le fluide frigorigène peut également comprendre au moins un fluoroalcène ayant de 3 à 6 atomes de carbone. De preference, le fluoroalcène est choisi parmi les fluoropropènes, notamment les trifluoropropènes tel que le 1,1,1-trifluoropropène, les tetrafluoropropènes tels que le 2,3,3,3-tetrafluoropropène (HFO-1234yf), le 1,3,3,3-tetrafluoropropène et les fluorobutènes. Les fluoromethylpropènes peuvent convenir.

De préférence, le fluide frigorigène comprend au moins 10 % en poids d'hydrochlorofluorooléfines.

Le fluide frigorigène utilisé dans la présente invention peut comprendre un stabilisant de l'hydrochlorofluorooléfine. Le stabilisant représente au plus 5 % en poids par rapport à la composition totale du fluide.

Comme stabilisants, on peut citer notamment le nitromethane, l'acide ascorbique, l'acide terephtalique, les azoles tels que le tolutriazole ou le benzotriazole, les composés phénoliques tels que le tocopherol, l'hydroquinone, le t-butyl hydroquinone, le 2,6-di-ter-butyl-4-methylphenol, les epoxydes (alkyl éventuellement fluoré ou perfluoré ou alkenyl ou aromatique) tels que les n-butyl glycidyl ether, hexanediol diglycidyl ether, allyl glycidyl ether, butylphenylglycidyl ether, les phosphites, les phosphates, les phosphonates, les thiols et lactones.

Le fluide frigorigène utilisé dans le procédé selon la présente invention peut comprendre des lubrifiants tels que l'huile minérale, alkylbenzène, le polyalkylène glycol et le polyvinyl éther.

### PARTIE EXPERIMENTALE

Dans ce qui suit :
Evap P est la pression à l'évaporateur
Cond P est la pression au condenseur
T cond est la température de condensation
Te comp est la température entrée compresseur
Taux : le taux de compression
T sortie comp est la température à la sortie compresseur
COP : coefficient de performance et est défini, lorsqu'il s'agit d'une pompe à chaleur comme étant la puissance chaude utile fournie par le système sur la puissance apportée ou consommée par le système
CAP : capacité volumétrique, c'est la capacité calorifique par unité de volume (kJ/m³)
% CAP ou COP c'est le rapport de la valeur du CAP ou COP du fluide par rapport à celui obtenu avec le HCFC-114.

### Exemple 1

Les performances du fluide frigorigène dans les conditions de fonctionnement de pompe à chaleur et en fixant la température à l'évaporateur à 10°C et celle au condenseur à 100°C sont données ci-dessous.

Pour le HCFC-114, la pression nominale de fonctionnement est de 14,19 bar, la capacité volumétrique est de 785 kJ/m³ et le COP est de 2,07 dans les conditions de fonctionnement suivantes :
Rendement isentropique du compresseur : 80 %

| | HCFC-114 | HFC-365mfc | HCFO-1233zd | HFC-365mfc/HFC-227ea |
|---|---|---|---|---|
| Temp évap (°C) | 10 | 10 | 10 | 10 |
| T e comp | 15 | 15 | 15 | 15 |
| Evap P (kpa) | 129 | 30 | 76 | |
| Cond P (kPa) | 1419 | 590 | 1048 | |
| Taux (p/p) | 11,04 | 19,81 | 13,72 | 27,1 |
| T cond (°C) | 100 | 100 | 100 | 100 |
| T sortie comp (°C) | 100 | 100 | 103 | |
| CAP (KJ/m3) | 785 | 260 | 630 | 374 |
| COP | 2,07 | 2,30 | 2,42 | 2,40 |
| %CAP | 100 | 33 | 80 | 48 |
| %COP | 100 | 111 | 117 | 116 |

### Exemple 2

Les performances du fluide frigorigène dans les conditions de fonctionnement de pompe à chaleur et en fixant la température à l'évaporateur à 50°C et celle au condenseur à 80°C sont données ci-dessous.

Pour le HCFC-114, la pression nominale de fonctionnement est de 9,3 bar, la capacité volumétrique est de 3321 kJ/m³ et le COP est de 8,19 dans les conditions de fonctionnement suivantes :
Rendement isentropique du compresseur : 80 %

| | HCFC-114 | HFC-365mfc | HCFO-1233zd |
|---|---|---|---|
| Temp sortie évap (°C) | 50 | 50 | 50 |
| T e comp (°C) | 65 | 65 | 65 |
| Evap P (kpa) | 447 | 142 | 298 |
| Cond P (kPa) | 930 | 352 | 663 |
| Taux (p/p) | 2,08 | 2,48 | 2,22 |
| T cond (°C) | 80 | 80 | 80 |
| T sortie comp (°C) | 90 | 87 | 94 |
| CAP (KJ/m3) | 3321 | 1394 | 2554 |
| COP | 8,19 | 8,60 | 8,53 |
| %CAP | 100 | 42 | 77 |
| %COP | 100 | 105 | 104 |

### Exemple 3

Les performances du fluide frigorigène dans les conditions de fonctionnement de pompe à chaleur et en fixant la température à l'évaporateur à 50°C et la température au condenseur à 95°C sont données ci-dessous.

Pour le HCFC-114, la pression nominale de fonctionnement est de 12,82 bar, la capacité volumétrique est de 2976 kJ/m³ et le COP est de 5,19 dans les conditions de fonctionnement suivantes :
Rendement isentropique du compresseur : 80 %

| | HCFC-114 | HFC-365mfc | HCFO-1233zd | HFO-1234yf |
|---|---|---|---|---|
| Temp évap (°C) | 50 | 50 | 50 | 50 |
| T e comp (°C) | 65 | 65 | 65 | 65 |
| Evap P (kpa) | 447 | 142 | 298 | 1283 |
| Cond P (kPa) | 1282 | 522 | 939 | 3345 |
| Taux (p/p) | 2,87 | 3,67 | 3,15 | 2,61 |
| T cond (°C) | 95 | 95 | 95 | 95 |
| T sortie comp (°C) | 103 | 98 | 107 | 113 |
| CAP (KJ/m3) | 2976 | 1284 | 2379 | 4065 |
| COP | 5,19 | 5,56 | 5,56 | 2,80 |
| %CAP | 100 | 43 | 80 | 137 |
| %COP | 100 | 107 | 107 | 54 |

### Exemple 4

Les performances du fluide frigorigène dans les conditions de fonctionnement de pompe à chaleur et en fixant la température à l'évaporateur à 50°C et celle au condenseur à 110°C sont données ci-dessous.

Pour le HCFC-114, la pression nominale de fonctionnement est de 17,26 bar, la capacité volumétrique est de 2573 kJ/m³ et le COP est de 3,56 dans les conditions de fonctionnement suivantes :
Rendement isentropique du compresseur : 80 %

| | HCFC-114 | HFC-365mfc | HCFO-1233zd |
|---|---|---|---|
| Temp évap (°C) | 50 | 50 | 50 |
| T e comp (°C) | 65 | 65 | 65 |
| Evap P (kpa) | 447 | 142 | 298 |
| Cond P (kPa) | 1726 | 748 | 1294 |
| Taux (p/p) | 3,86 | 5,26 | 4,34 |
| Tcond (°C) | 110 | 110 | 110 |
| T sortie comp (°C) | 116 | 110 | 121 |
| CAP (KJ/m3) | 2573 | 1157 | 2172 |
| COP | 3,56 | 3,97 | 4,00 |
| %CAP | 100 | 45 | 84 |
| %COP | 100 | 111 | 112 |

### Exemple 5

Les performances du fluide frigorigène dans les conditions de fonctionnement de pompe à chaleur et en fixant la température à l'évaporateur à 50°C et au condenseur à 120°C sont données ci-dessous.

Pour le HCFC-114, la pression nominale de fonctionnement est de 20,82 bar, la capacité volumétrique est de 2257 kJ/m³ et le COP est de 2,79 dans les conditions de fonctionnement suivantes :
Rendement isentropique du compresseur : 80 %

| | HCFC-114 | HFC-365mfc | HCFO-1233zd |
|---|---|---|---|
| Temp évap (°C) | 50 | 50 | 50 |
| T e comp (°C) | 65 | 65 | 65 |
| Evap P (kpa) | 447 | 142 | 298 |
| Cond P (kPa) | 2082 | 936 | 1581 |
| Taux (p/p) | 4,66 | 6,58 | 5,30 |
| T cond (°C) | 120 | 120 | 120 |
| T sortie comp (°C) | 125 | 120 | 130 |
| CAP (KJ/m3) | 2257 | 1063 | 2015 |
| COP | 2,79 | 3,25 | 3,29 |
| %CAP | 100 | 47 | 89 |
| %COP | 100 | 116 | 118 |

### Exemple 6

Les performances du fluide frigorigène dans les conditions de fonctionnement de pompe à chaleur et en fixant la température à l'évaporateur à 80°C et au condenseur à 110°C sont données ci-dessous.

Pour le HCFC-114, la pression nominale de fonctionnement est de 17,26 bar, la capacité volumétrique est de 5475 kJ/m³ et le COP est de 7,94 dans les conditions de fonctionnement suivantes :
Rendement isentropique du compresseur : 80 %

| | HCFC-114 | HFC-365mfc | HCFO-1233zd |
|---|---|---|---|
| Temp évap (°C) | 80 | 80 | 80 |
| T e comp (°C) | 90 | 90 | 90 |
| Evap P (kpa) | 930 | 352 | 663 |
| Cond P (kPa) | 1726 | 748 | 1294 |
| Taux (p/p) | 1,86 | 2,12 | 1,95 |
| T cond (°C) | 110 | 110 | 110 |
| T sortie comp (°C) | 116 | 111 | 117 |
| CAP (KJ/m3) | 5475 | 2872 | 4705 |
| COP | 7,94 | 8,83 | 8,72 |
| %CAP | 100 | 52 | 86 |
| %COP | 100 | 111 | 110 |

### Exemple 7

Les performances du fluide frigorigène dans les conditions de fonctionnement de pompe à chaleur et en fixant la température à l'évaporateur à 80°C et au condenseur à 120°C sont données ci-dessous.

Pour le HCFC-114, la pression nominale de fonctionnement est de 20,82 bar, la capacité volumétrique est de 4810 kJ/m³ et le COP est de 5,45 dans les conditions de fonctionnement suivantes :
Rendement isentropique du compresseur : 80 %

| | HCFC-114 | HFC-365mfc | HCFO-1233zd |
|---|---|---|---|
| Temp évap (°C) | 80 | 80 | 80 |
| T e comp (°C) | 90 | 90 | 90 |
| Evap P (kpa) | 930 | 352 | 663 |
| Cond P (kPa) | 2082 | 936 | 1581 |
| Taux (p/p) | 2,24 | 2,66 | 2,38 |
| T cond (°C) | 120 | 120 | 120 |
| T sortie comp (°C) | 126 | 120 | 127 |
| CAP (KJ/m3) | 4810 | 2648 | 4360 |
| COP | 5,45 | 6,36 | 6,24 |
| %CAP | 100 | 55 | 91 |
| %COP | 100 | 117 | 114 |

### Exemple 8

Les performances du fluide frigorigène dans les conditions de fonctionnement de pompe à chaleur et en fixant la température à l'évaporateur à 80°C et au condenseur à 130°C sont données ci-dessous.

Pour le HCFC-114, la pression nominale de fonctionnement est de 24,92 bar, la capacité volumétrique est de 4027 kJ/m³ et le COP est de 3,79 dans les conditions de fonctionnement suivantes :
Rendement isentropique du compresseur : 80 %

| | HCFC-114 | HFC-365mfc | HCFO-1233zd |
|---|---|---|---|
| Temp évap (°C) | 80 | 80 | 80 |
| T e comp (°C) | 90 | 90 | 90 |
| Evap P (kpa) | 930 | 352 | 663 |
| Cond P (kPa) | 2492 | 1157 | 1913 |
| Taux (p/p) | 2,68 | 3,28 | 2,88 |
| T cond (°C) | 130 | 130 | 130 |
| T sortie comp (°C) | 136 | 130 | 136 |
| CAP (KJ/m3) | 4027 | 2403 | 3967 |
| COP | 3,79 | 4,81 | 4,71 |
| %CAP | 100 | 60 | 99 |
| %COP | 100 | 127 | 124 |

### Exemple 9

Les performances du fluide frigorigène dans les conditions de fonctionnement de pompe à chaleur et en fixant la température à l'évaporateur à 80°C et au condenseur à 140°C sont données ci-dessous.

Pour le HCFC-114, la pression nominale de fonctionnement est de 29,61 bar, la capacité volumétrique est de 2971 kJ/m³ et le COP est de 2,46 dans les conditions de fonctionnement suivantes :
Rendement isentropique du compresseur : 80 %

| | HCFC-114 | HFC-365mfc | HCFO-1233zd |
|---|---|---|---|
| Temp évap (°C) | 80 | 80 | 80 |
| T e comp (°C) | 90 | 90 | 90 |
| Evap P (kpa) | 930 | 352 | 663 |
| Cond P (kPa) | 2961 | 1417 | 2295 |
| Taux (p/p) | 3,19 | 4,02 | 3,46 |
| T cond (°C) | 140 | 140 | 140 |
| T sortie comp (°C) | 147 | 140 | 147 |
| CAP (KJ/m3) | 2971 | 2134 | 3520 |
| COP | 2,46 | 3,73 | 3,62 |
| %CAP | 100 | 72 | 118 |
| %COP | 100 | 152 | 147 |

## Revendications

1. Procédé de transfert de chaleur mettant en oeuvre un système à compression comportant au moins un étage comprenant successivement une étape d'évaporation d'un fluide frigorigène, une étape de compression, une étape de condensation dudit fluide à une température supérieure ou égale à 70°C et une étape de détente dudit fluide **caractérisé en ce que** le fluide frigorigène comprend au moins une hydrochlorofluorooléfine.

2. Procédé selon la revendication 1 **caractérisé en ce que** la température est comprise entre 70 et 140°C, de préférence entre 95 et 125°C.

3. Procédé selon la revendication 1 ou 2 **caractérisé en ce que** le fluide frigorigène comprend au moins un hydrofluorocarbure.

4. Procédé selon l'une quelconque des revendications 1 à 3 **caractérisé en ce que** le fluide frigorigène comprend au moins un hydrofluoroéther.

5. Procédé selon l'une quelconque des revendications 1 à 4 **caractérisé en ce que** le fluide frigorigène comprend au moins un fluoroalcène.

6. Procédé selon l'une quelconque des revendications 1 à 5 **caractérisé en ce que** l'hydrochlorofluorooléfine comporte au moins trois atomes de fluor.

7. Procédé selon l'une quelconque des revendications 1 à 6 **caractérisé en ce que** l'hydrochlorofluorooléfine est choisi parmi le 1-chloro,3,3,3-trifluororpropène et le 2-chloro,3,3,3-truifluororpropène.

## Patentansprüche

1. Wärmeaustauschverfahren, das ein Kompressionssystem umsetzt, umfassend mindestens eine Stufe, die nacheinander einen Verdampfungsschritt eines Kältemittels, einen Kompressionsschritt, einen Kondensationsschritt des Kältemittels bei einer Temperatur, die höher als oder gleich 70 °C ist, und einen Entspannungsschritt des Kältemittels umfasst, **dadurch gekennzeichnet, dass** das Kältemittel mindestens ein Hydrochlorfluorolefin umfasst.

2. Verfahren nach Anspruch 1, **dadurch gekennzeichnet, dass** die Temperatur zwischen 70 und 140 °C, vorzugsweise zwischen 95 und 125 °C beträgt.

3. Verfahren nach Anspruch 1 oder 2, **dadurch gekennzeichnet, dass** das Kältemittel mindestens einen Fluorkohlenwasserstoff umfasst.

4. Verfahren nach einem der Ansprüche 1 bis 3, **dadurch gekennzeichnet, dass** das Kältemittel mindestens einen Hydrofluorether umfasst.

5. Verfahren nach einem der Ansprüche 1 bis 4, **dadurch gekennzeichnet, dass** das Kältemittel mindestens ein Fluoralken umfasst.

6. Verfahren nach einem der Ansprüche 1 bis 5, **dadurch gekennzeichnet, dass** das Hydrochlorfluorolefin mindestens drei Fluoratome umfasst.

7. Verfahren nach einem der Ansprüche 1 bis 6, **dadurch gekennzeichnet, dass** das Hydrochlorfluorolefin ausgewählt ist aus 1-Chlor,3,3,3-trifluorpropen und 2-Chlor,3,3,3-trifluorpropen.

## Claims

1. Heat transfer method employing a compression system comprising at least one stage successively comprising a stage of evaporation of a refrigerant, a stage of compression, a stage of condensation of the said fluid at a temperature greater than or equal to 70°C and a stage of reduction in pressure of the said fluid, **characterized in that** the refrigerant comprises at least one hydrochlorofluoroolefin.

2. Method according to Claim 1, **characterized in that** the temperature is between 70°C and 140°C, preferably between 95°C and 125°C.

3. Method according to Claim 1 or 2, **characterized in that** the refrigerant comprises at least one hydrofluorocarbon.

4. Method according to any one of Claims 1 to 3, **characterized in that** the refrigerant comprises at least one hydrofluoroether.

5. Method according to any one of Claims 1 to 4, **characterized in that** the refrigerant comprises at least one fluoroalkene.

6. Method according to any one of Claims 1 to 5, **characterized in that** the hydrochlorofluoroolefin comprises at least three fluorine atoms.

7. Method according to any one of Claims 1 to 6, **characterized in that** the hydrochlorofluoroolefin is chosen from 1-chloro-3,3,3-trifluoropropene and 2-chloro-3,3,3-trifluoropropene.
